Europäisches Patentamt

European Patent Office

Office européen des brevets

(11) Veröffentlichungsnummer: **0 510 476 B1**

(12) **EUROPÄISCHE PATENTSCHRIFT**

(45) Veröffentlichungstag der Patentschrift: **15.11.95**

(51) Int. Cl.6: **C08G 18/70**, C08G 18/48, C08G 18/80, C08G 18/79, C08G 18/78, C09J 175/04, C09D 175/04, C09K 3/10

(21) Anmeldenummer: **92106347.5**

(22) Anmeldetag: **13.04.92**

Die Akte enthält technische Angaben, die nach dem Eingang der Anmeldung eingereicht wurden und die nicht in dieser Patentschrift enthalten sind.

(54) **Polyisocyanatsuspensionen in gegenüber Isocyanatgruppen reaktionsfähigen Verbindungen und ihre Verwendung.**

(30) Priorität: **25.04.91 DE 4113416**

(43) Veröffentlichungstag der Anmeldung: **28.10.92 Patentblatt 92/44**

(45) Bekanntmachung des Hinweises auf die Patenterteilung: **15.11.95 Patentblatt 95/46**

(84) Benannte Vertragsstaaten: **BE CH DE ES FR GB IT LI NL SE**

(56) Entgegenhaltungen:
**EP-A- 0 062 780**
**EP-A- 0 209 823**

(73) Patentinhaber: **BAYER AG**

**D-51368 Leverkusen (DE)**

(72) Erfinder: **Drouvé, Werner**
**Franz-Marc-Strasse 88**
**W-5090 Leverkusen 1 (DE)**
Erfinder: **Höhlein, Peter, Dr.**
**Windmühlenweg 3e**
**W-4152 Kempen 3 (DE)**
Erfinder: **Wieczorrek, Wolfhart**
**Egerstrasse 6**
**W-5000 Köln 90 (DE)**

**Beschreibung**

Die Erfindung betrifft neue Suspensionen von festen, an der Oberfläche desaktivierten Polyisocyanaten in gegenüber Isocyanatgruppen reaktionsfähigen Verbindungen und ihre Verwendung für die unterschiedlichsten Einsatzgebiete.

Es ist bereits bekannt, Suspensionen von festen, an der Oberfläche durch Adduktbildung desaktivierten Polyisocyanaten in Verbindungen mit gegenüber Isocyanatgruppen reaktionsfähigen Wasserstoffatomen, insbesondere Polyhydroxylverbindungen herzustellen und als hitze-vernetzbare Einkomponenten-Systeme für die unterschiedlichsten Einsatzgebiete einzusetzen (vgl. z.B. EP-A 00 62 780, DE-OS 32 30 757 ( = US-PS 4 483 974) oder DE-OS 34 18 430 ( = US-PS 4 619 985)). Nachteilhaft bei den Systemen des Standes der Technik ist oftmals eine Tendenz zur Blasenbildung bei der Aushärtung und eine starke Neigung zur Vergilbung von aus derartigen Suspensionen hergestellten Beschichtungen bei der Lagerung im Tageslicht.

Überraschenderweise wurde jetzt gefunden, daß die bekannten Suspensionen bezüglich dieser Eigenschaften ganz wesentlich verbessert werden können, wenn die die kontinuierliche Phase bildenden, gegenüber Isocyanatgruppen reaktionsfähigen Verbindungen zumindest teilweise aus Ether- und Estergruppen aufweisenden Polyhydroxylverbindungen bestehen, die weitgehend den Verbindungen entsprechen, wie sie gemäß EP-A 0 209 823 ( = US-PS 4 677 181) als Reaktionspartner für freie oder mit Blockierungsmitteln blockierten Polyisocyanaten bei der Herstellung von Beschichtungsmitteln oder Vergußmassen empfohlen werden. Dieser Befund ist überraschend, da es sich bei den entsprechenden, nachstehend näher beschriebenen erfindungsgemäßen Suspensionen nach wie vor vorzugsweise um solche auf Basis von aromatischen Polyisocyanaten handelt, so daß eine Verringerung der Tendenz zur Vergilbung am Tageslicht nicht zu erwarten war, und außerdem im Hinblick auf den Umstand, daß den Systemen gemäß EP-A 0 209 823, wie den Ausführungsbeispielen zu entnehmen, Trocknungsmittel einverleibt werden müssen, um eine einwandfreie blasenfreie Aushärtung zu gewährleisten. Überraschenderweise bewirkt jedoch die Verwendung bzw. Mitverwendung der Etherester der genannten Vorveröffentlichung als kontinuierliche Phase oder als Teil der kontinuierlichen Phase von Suspensionen von Oberflächen-desaktivierten Polyisocyanaten auch ohne Mitverwendung von irgendwelchen Trocknungsmitteln eine deutliche Reduzierung der Tendenz zur Blasenbildung beim Aushärten.

Gegenstand der Erfindung sind bei Raumtemperatur lagerstabile, hitzehärtbare, gegebenenfalls Hilfs- und Zusatzmittel der Beschichtungstechnologie enthaltende Suspensionen von festen, an der Oberfläche durch Adduktbildung desaktivierten Polyisocyanaten in organischen Verbindungen mit mindestens zwei gegenüber Isocyanatgruppen reaktionsfähigen Gruppen als kontinuierliche Phase, dadurch gekennzeichnet, daß die die kontinuierliche Phase bildenden Verbindungen zumindest zu 10 Gew.-% aus Ether- und Estergruppen aufweisenden Polyhydroxylverbindungen einer (mittleren) Hydroxylfunktionalität von 0,5 bis 3 und einer (mittleren) Hydroxylzahl von 15 bis 150 bestehen und das Veresterungsprodukt von (i) Polyetherpolyolen einer (mittleren) Hydroxylfunktionalität von 3 bis 8 und einer (mittleren) Hydroxylzahl von 200 bis 1000 mit (ii) 40 bis 90 Äquivalent-% an organischen Monocarbonsäuren darstellen, wobei sich die Prozentangaben auf die Hydroxylgruppen der Komponente (i) und die Carboxylgruppen der Komponente (ii) beziehen.

Gegenstand der Erfindung ist auch die Verwendung der erfindungsgemäßen Suspensionen zur Herstellung von vergilbungsresistenten, unter dem Einfluß von Hitze aushärtbaren Beschichtungen, Verklebungen oder Dichtmassen für beliebige Substrate, insbesondere als Unterboden- und Schwellerschutzmasse für Kraftfahrzeuge.

Die erfindungsgemäßen Suspensionen bestehen im wesentlichen aus feinteiligen, an der Oberfläche desaktivierten festen Polyisocyanaten als disperse Phase und bei Raumtemperatur flüssigen, gegenüber Isocyanatgruppen reaktionsfähige Gruppen aufweisenden organischen Verbindungen als kontinuierliche Phase. Außerdem können die erfindungsgemäßen Dispersionen selbstverständlich noch Hilfs- und Zusatzmittel enthalten, wie sie beispielsweise aus der Lacktechnologie bekannt sind. Diese Zusatzmittel können entweder feste Substanzen darstellen, so daß sie Teil der dispersen Phase sind (beispielsweise Pigmente oder Füllstoffe) oder aber auch lösliche Substanzen darstellen, so daß sie Teil der kontinuierlichen Phase sind (beispielsweise Weichmacher, Katalysatoren u.dgl.).

Die den Hauptbestandteil der dispersen Phase bildenden, an der Oberfläche desaktivierten, festen, feinteiligen Polyisocyanate entsprechen den bislang für diesen Zweck eingesetzten Verbindungen des Standes der Technik. Als Ausgangsmaterialien kommen insbesondere bei Raumtemperatur feste, in der Polyhydroxylkomponente unlösliche aromatische Polyisocyanate in Betracht, wie beispielsweise das Uretdiondiisocyanat auf Basis von 2,4-Diisocyanatotoluol bzw. auf Basis von dessen technischen Gemischen mit bis zu 35 Gew.-%, bezogen auf Isomerengemisch, an 2,6-Diisocyanatotoluol, sowie das Harnstoffdiisocyanat auf Basis der genannten Diisocyanatotoluole, deren Herstellung beispielsweise in DE-OS 36 38 148 ( = US-

2

PS 4 757 105) beschrieben ist, Andere, gemäß dieser Vorveröffentlichung zugängliche, bei Raumtemperatur feste, Harnstoffgruppen aufweisende Polyisocyanate sind ebenfalls als Ausgangsmaterialien für die an der Oberfläche desaktivierten Polyisocyanate geeignet. Besonders bevorzugt werden jedoch die genannten Uretdiondiisocyanate und Harnstoffdiisocyanate auf Basis von 2,4-Diisocyanatotoluol verwendet. Die Desaktivierung an der Oberfläche durch Adduktbildung erfolgt ebenfalls nach bekannten Methoden des Standes der Technik, wobei zur Desaktivierung beliebige, aus dem Stand der Technik bekannte Desaktivierungsmittel in Betracht kommen. Diesbezüglich sei beispielsweise auf die Offenbarung der EP-A 0 062 780 der DE-OS 32 30 757 (= US-PS 4 483 974) oder der DE-OS 34 18 430 (= US-PS 4 619 985) verwiesen. Besonders bevorzugte Desaktivierungsmittel sind primäre und/oder sekundäre Amine mit (cyclo)aliphatisch gebundenen Aminogruppen wie insbesondere Ethylendiamin, Hexamethylendiamin, 4,4'-Diamino-dicyclohexylmethan oder insbesondere 4,4'-Diamino-3,3'-dimethyl-dicyclohexylmethan.

Die Desaktivierung kann sowohl in situ in den Polyhydroxylverbindungen oder einem Teil der Polyhydroxylverbindungen erfolgen, die den wesentlichen Bestandteil der kontinuierlichen Phase der erfindungsgemäßen Suspensionen bilden, oder aber auch in einem getrennten Ansatz unter Verwendung von organischen Flüssigkeiten, die für das Desaktivierungsmittel, jedoch nicht für das feste Ausgangspolyisocyanat ein Lösungsmittel darstellen, beispielsweise in Aceton oder Cyclohexan, wie dies in EP-A-0 062 780 beschrieben ist, Auch Wasser ist als Reaktionsmedium für die Desaktivierungsreaktion geeignet.

Zur Desaktivierung werden die Ausgangspolyisocyanate in dem als Hilfsmittel eingesetzten flüssigen Medium suspendiert und vorzugsweise bei Raumtemperatur mit dem Desaktivierungsmittel umgesetzt. Das aminische Desaktivierungsmittel kommt hierbei in einer Menge von 0,01 bis 25, vorzugsweise 0,1 bis 8 und besonders bevorzugt von 0,3 bis 3 Äquivalent-%, bezogen auf die Aminogruppen des Desaktivierungsmittels und die Isocyanatgruppen des suspendierten Ausgangspolyisocyanats, zum Einsatz. Im übrigen erfolgt die Desaktivierung in völliger Analogie zu den bereits bekannten, beispielsweise in den obengenannten Veröffentlichungen beschriebenen Verfahren.

Erfindungswesentlich ist die chemische Natur der als kontinuierliche Phase eingesetzten Polyhydroxylverbindungen. Die kontinuierliche Phase der erfindungsgemäßen Suspensionen besteht zumindest zu 10 Gew.-% aus Ether- und Estergruppen aufweisenden Polyhydroxylverbindungen der bereits obengenannten Art. Vorzugsweise handelt es sich bei diesen erfindungswesentlichen Polyhydroxylverbindungen um solche einer (mittleren) Hydroxylfunktionalität von 0,5 bis 3 und einer (mittleren) Hydroxylzahl von 15 bis 150 bei einer Viskosität von 150 bis 350 mPa.s/20°C.

Die Herstellung dieser erfindungswesentlichen Polyhydroxylverbindungen erfolgt in völliger Analogie zu Herstellung der Ether- und Estergruppen aufweisenden Polyhydroxylverbindungen gemäß EP-A-0 209 823 (= US-PS 4 677 181), wobei auch zur Herstellung der erfindungswesentlichen Ether- und Estergruppen aufweisenden Polyhydroxylverbindungen die in diesen Vorveröffentlichungen genannten Ausgangsmaterialien zum Einsatz kommen, wobei jedoch, wie aus den obengemachten Angaben bezüglich des Äquivalentverhältnisses ersichtlich, auch höhere Anteile an Monocarbonsäuren als 70 Äquivalent-% in Betracht kommen.

Neben diesen erfindungswesentlichen, Ether- und Estergruppen aufweisenden Polyhydroxylverbindungen können in der kontinuierlichen Phase der erfindungsgemäßen Suspensionen andere, aus der Polyurethanchemie an sich bekannte Verbindungen mit gegenüber Isocyanatgruppen reaktionsfähigen Gruppen vorliegen. In Betracht kommen sowohl alkoholische Hydroxylgruppen als auch primäre oder sekundäre Aminogruppen aufweisende, im Sinne der Isocyanat-Additionsreaktion mindestens difunktionelle Verbindungen der an sich bekannten Art.

Beispielhaft genannt seien aus der Polyurethanchemie bekannte Polyhydroxypolyester, -polyether, -polycarbonate oder -polyacetale des Molekulargewichtsbereichs 400 bis 6000, vorzugsweise 800 bis 6000 und besonders bevorzugt 1000 bis 4500 mit 2 bis 8, vorzugsweise 2 bis 4 Hydroxylgruppen pro Molekül, die aus der Polyurethanchemie an sich bekannten Aminopolyether eines entsprechenden Molekulargewichtsbereichs mit vorzugsweise 2 bis 4 primären, aliphatisch oder aromatisch gebundenen Aminogruppen oder auch niedermolekulare Kettenverlängerungsmittel oder Vernetzer wie beispielsweise mehrwertige Alkohole des Molekulargewichtsbereichs 62 bis 400 wie Ethylenglykol, Glycerin, Trimethylolpropan, Pentaerythrit, die niedermolekularen Alkoxylierungsprodukte dieser Alkohole, aliphatische Polyamine wie Ethylendiamin oder Hexamethylendiamin, cycloaliphatische Polyamine wie 4,4'-Diamino-dicyclohexylmethan, aromatische Polyamine wie 2,4- oder 2,6-Diaminotoluol, 4,4'-Diaminodiphenylmethan, 4,4'-Diamino-3,3'-dimethyldiphenylmethan, 1-Methyl-3,5-diethyl-2,4-diaminobenzol oder dessen technische Gemische mit dem entsprechenden 2,6-Diamino-Isomeren (DETDA) oder beliebige Gemische derartiger Verbindungen mit gegenüber Isocyanatgruppen reaktionsfähigen Wasserstoffatomen. Vorzugsweise besteht die kontinuierliche Phase der erfindungsgemäßen Suspensionen zumindest zu 50 Gew.-% aus höhermolekularen Verbindungen der genannten Art, insbesondere solchen des Molekulargewichtsbereichs 800 bis 6000.

In den erfindungsgemäßen Suspensionen liegen die an der Oberfläche desaktivierten, pulverförmigen festen Polyisocyanate in einer solchen Menge vor, die einem Äquivalentverhältnis von Isocyanatgruppen aus stabilisiertem Isocyanat zu Amino- bzw. Hydroxylgruppen der kontinuierlichen Phase von 0,5:1 bis 1,5:1, vorzugsweise 0,8:1 bis 1,5:1 entsprechen, wobei Uretdiongruppen aufweisende (dimere) Diisocyanate nur bezüglich der in ihnen vorliegenden freien Isocyanatgruppen in die Berechnung eingehen.

In den erfindungsgemäßen Suspensionen können, wie bereits oben ausgeführt, die aus der Lacktechnolgie an sich bekannten Hilfs- und Zusatzmittel wie beispielsweise Pigmente, Füllstoffe, Katalysatoren, Verlauf- oder Rheologiehilfsmittel, inerte Lösungsmittel oder Weichmacher enthalten sein.

Die erfindungsgemäßen Suspensionen stellen vergleichsweise niederviskose Systeme dar, die nach den üblichen Methoden der Lacktechnologie appliziert werden können. Die Suspensionen eignen sich als Beschichtungsmittel, Verklebungsmittel, Entdröhnungsmittel oder Nahtabdichtungsmassen auf Metallen oder Nichtmetallen. Besonders bevorzugt werden sie als Unterbodenschutz- und Schwellerschutzmassen für Kraftfahrzeuge verwendet. Ihre Aushärtung erfolgt im allgemeinen durch 15- bis 40-minütiges Erhitzen auf 110 bis 150°C.

In den nachfolgenden Beispielen beziehen sich alle Angaben in "Teilen" auf das Gewicht.

## Beispiele

### Beispiel 1

(Herstellung einer Ether- und Estergruppen aufweisenden Hydroxylverbindung)

In einem mit Rührer, Heizung, Stickstoffeinleitungsrohr, Kolonne und Wasserabgang ausgestatteten 15 l-Rührkessel werden 7665 g Sojaölfettsäure und 3826,8 g eines propoxylierten Sorbits mit einer Viskosität von 16.000 mPasec bei 25°C, einem Äquivalentgewicht von 125 und einer OH-Zahl von 425 mg KOH/g Substanz unter Durchleiten von 5 bis 6 l Stickstoff/Stunde eingewogen. Danach wird in ca. 3 Stunden auf 200°C aufgeheizt. Dabei darf die am Kopf der Kolonne gemessene Temperatur von 105°C nicht überschritten werden, Sobald die Sumpftemperatur von 200°C erreicht ist und die Kopftemperatur 90°C unterschreitet, wird zuerst die Kolonne entfernt und danach der Stickstoffstrom auf 30 l/Stunde erhöht. Es wird solange kondensiert, bis eine Säurezahl von 1,4 mg KOH/g Substanz erreicht worden ist. Danach wird auf 100°C abgekühlt und das fertige Produkt über ein Gewebefilter filtriert. Es resultiert eine erfindungsgemäß verwendbare Polyhydroxylverbindung mit einer Iodfarbzahl von 2, einer Viskosität von 225 mPasec bei 20°C, einer OH-Zahl von 23 mg KOH/g Substanz und einer Säurezahl von 4,5 mg KOH/g Substanz.

### Beispiel 2

(Herstellung einer Ether- und Estergruppen aufweisenden Hydroxylverbindung)

Es wird wie in Beispiel 1 verfahren, jedoch werden 6 852 g Sojaölfettsäure und 4 586 g des propoxylierten Sorbits eingewogen. Es resultiert eine erfindungsgemäß verwendbare Polyhydroxylverbindung mit einer Iodfarbzahl von 2, einer Viskosität von 280 mPa.s bei 23°C, einer OH-Zahl von 66 mg KOH/g Substanz und einer Säurezahl von 1,7 mg KOH/g Substanz.

### Beispiel 3

(Herstellung eines an der Oberfläche desaktivierten Polyisocyanats)

In 100 Teile eines Polyethertriols des Molekulargewichts 3000, hergestellt durch Propoxylierung von Glycerin, werden 0,65 Teile 4,4'-Diamino-3,3'-dimethyl-dicyclohexylmethan gelöst und 88,7 Teile dimeres, feinpulverisiertes Toluylen-2,4-diisocyanat unter intensivem Rühren suspendiert. Man erhält auf diese Weise eine Suspension eines an der Oberfläche desaktivierten Polyisocyanats, in der das Polyethertriol die kontinuierliche Phase bildet.

### Beispiel 4 (Vergleichsbeispiel)

100 Teile des Polyethertriols aus Beispiel 3, 6,2 Teile eines technischen Gemischs aus 80 Gew.-% 1-Methyl-3,5-diethyl-2,4-diaminobenzol und 20 Gew.-% 1-Methyl-3,5-diethyl-2,6-diaminobenzol (DETDA), 3,2 Teile Titandioxid (Rutil), 29,2 Teile gemahlener Schwerspat, 29,2 Teile Mikrotalkum und 0,8 Teile Bi-tris-neodecanoat werden in einem Dissolver bei ca. 40°C dispergiert. Nach Abkühlung auf ca. 25°C werden 90,2 Teile einer Polyisocyanatsuspension gemäß Beispiel 2 unter Rühren zugegeben und vermischt. (Äquivalentverhältnis NCO-Gruppen : NCO-reaktive Gruppen = 1,03:1).

Beispiel 5

Es wird wie in Beispiel 4 verfahren, jedoch werden zusätzlich zum Polyethertriol 20 Teile eines Polyetheresters gemäß Beispiel 1 unter Rühren zugefügt. (Äquivalentverhältnis NCO-Gruppen : NCO-reaktive Gruppen = 1:1).

Beispiel 6

Es wird wie in Beispiel 4 verfahren, jedoch werden zusätzlich zum Polyethertriol 20 Teile eines Polyetheresters gemäß Beispiel 2 unter Rühren zugefügt. (Äquivalentverhältnis NCO-Gruppen : NCO-reaktive Gruppen = 0,85:1)

Beispiel 7 (Verwendung)

Beschichtungsmassen entsprechend Beispiel 4 bis 6 wurden in einer Schichtdicke von ca. 550 μm auf vorgrundiertes Stahlblech appliziert und während 30 Minuten bei 120°C ausgehärtet. Die für die Anwendung im Unterboden- oder Schwellerschutzbereich relevanten Produkteigenschaften werden nachstehend tabellarisch verglichen. Die Vergleichsdaten machen deutlich, daß das erfindungsgemäße System gegenüber dem Vergleichsbeispiel sowohl in der Applikationsviskosität, in der Oberflächenbeschaffenheit wie auch im Vergilbungsverhalten erhebliche Vorteile aufweist.

### Tabelle

| | Vergleichsbeispiel 4 | Beispiel 5 | Beispiel 6 |
|---|---|---|---|
| Verarbeitungsviskosität bei 23°C (mPa.s) | 2750 | 1980 | 2130 |
| Haftung auf vorgrundiertem Stahlblech | gut | gut | gut |
| Steinschlagfestigkeit | sehr gut | sehr gut | sehr gut |
| Oberflächenbeschaffenheit nach dem Einbrennen bei 15 Minuten | ohne Befund | ohne Befund | ohne Befund |
| 1 Stunde | viele Blasen | ohne Befund | ohne Befund |
| 2 Stunden | extrem viele Blasen | ohne Befund | ohne Befund |
| 8 Stunden | sehr viele Blasen | ohne Befund | ohne Befund |
| 24 Stunden Pause zwischen Applikation und Einbrennen | viele Blasen | ohne Befund | ohne Befund |
| Farbveränderung der Beschichtung nach 2 Monaten Lagerung im Tageslicht | stark gelb verfärbt | praktisch unverändert | praktisch unverändert |

## Patentansprüche

1. Bei Raumtemperatur lagerstabile, hitzehärtbare, gegebenenfalls Hilfs- und Zusatzmittel der Beschichtungstechnologie enthaltende Suspensionen von festen, an der Oberfläche durch Adduktbildung desaktivierten Polyisocyanaten in organischen Verbindungen mit mindestens zwei gegenüber Isocyanatgruppen reaktionsfähigen Gruppen als kontinuierliche Phase, dadurch gekennzeichnet, daß die die kontinuierliche Phase bildenden Verbindungen zumindest zu 10 Gew.-% aus Ether- und Estergruppen aufweisenden Polyhydroxylverbindungen einer (mittleren) Hydroxylfunktionalität von 0,5 bis 3 und einer (mittleren) Hydroxylzahl von 15 bis 150 bestehen und das Veresterungsprodukt von (i) Polyetherpolyolen einer (mittleren) Hydroxylfunktionalität von 3 bis 8 und einer (mittleren) Hydroxylzahl von 200 bis 1000 mit (ii) 40 bis 90 Äquivalent-% an organischen Monocarbonsäuren darstellen, wobei sich die Prozentangaben auf die Hydroxylgruppen der Komponente (i) und die Carboxylgruppen der Komponente (ii) beziehen.

2. Verwendung der Suspensionen gemäß Anspruch 1 zur Herstellung von vergilbungsresistenten, unter dem Einfluß von Hitze aushärtbaren Beschichtungen, Verklebungen oder Dichtmassen für beliebige Substrate.

3. Verwendung der Suspensionen gemäß Anspruch 1 als Unterbodenschutz- und Schwellerschutzmasse für Kraftfahrzeuge.

**Claims**

1. Suspensions of solid polyisocyanates, surface-inactivated by adduct formation, in organic compounds with at least two isocyanate-reactive groups as the continuous phase, which suspensions are stable in storage at room temperature, heat-curable and optionally contain coating technology auxiliary agents and additives, characterised in that the compounds forming the continuous phase consist to an extent of at least 10 wt.% of polyhydroxyl compounds containing ether and ester groups and of an (average) hydroxyl functionality of 0.5 to 3 and an (average) hydroxyl value of 15 to 150 and constitute the esterification product of (i) polyether polyols of an (average) hydroxyl functionality of 3 to 8 and an (average) hydroxyl value of 200 to 1000 with (ii) 40 to 90 equivalent percent of organic monocarboxylic acids, wherein the percentages are based on the hydroxyl groups of component (i) and the carboxyl groups of component (ii).

2. Use of the suspensions according to claim 1 for the production of yellowing-resistant, heat curable coatings, adhesives or sealing compositions for any substrates.

3. Use of the suspensions according to claim 1 as a protective underbody and sill coating composition for motor vehicles.

**Revendications**

1. Suspensions stables à la conservation à la température ambiante, durcissables à la chaleur, contenant le cas échéant des produits auxiliaires et additifs de l'industrie des peintures et vernis, de polyisocyanates solides, désactivés en surface par formation d'adducts, dans des composés organiques contenant au moins deux groupes réactifs avec les groupes isocyanates et qui constituent la phase continue, caractérisées en ce que les composés formant la phase continue consistent pour au moins 10 % en poids en composés polyhydroxylés contenant des groupes éthers et esters, à une fonctionnalité (moyenne) en groupes hydroxy de 0,5 à 3 et un indice d'hydroxyle (moyen) de 15 à 150 et sont des produits d'estérification de (i) des polyétherpolyols à une fonctionnalité (moyenne) en groupes hydroxy de 3 à 8 et un indice d'hydroxyle (moyen) de 200 à 1 000, avec (ii) 40 à 90 équivalents% d'acides organiques monocarboxyliques, les pourcentages indiqués se rapportant aux groupes hydroxy du composant (i) et aux groupes carboxyle du composant (ii).

2. Utilisation des suspensions selon revendication 1 pour l'application de revêtements, la réalisation de collages ou la préparation de masses d'étanchéité résistant au jaunissement, durcissables sous l'action de la chaleur, pour des supports quelconques.

3. Utilisation des suspensions selon revendication 1 en tant que masses de protection pour dessous de plancher et traverses de véhicule.